# EUROPEAN PATENT SPECIFICATION

(11) **EP 1 672 419 B1**
(45) Date of publication and mention of the grant of the patent: **07.03.2007**
(21) Application number: 05027411.7
(22) Date of filing: 14.12.2005
(51) Int. Cl.: G03B 15/08, G03B 11/00, G02B 5/28

(54) **Lens attachment for generating colored flares**
Objektivaufsatz zur Erzeugung von Farbreflexen
Accessoire d'objectif pour générer des tâches de lumière colorées

(30) Priority: 17.12.2004 EP 04030006
(43) Date of publication of application: 21.06.2006
(73) Proprietor: Vantage Film GmbH, 92637 Weiden (DE)
(72) Inventor: Märtin, Peter, 92637 Weiden (DE)
(74) Representative: Ruschke, Hans Edvard

(56) References cited:
- DE-A1- 2 050 652
- JP-A- 63 169 892
- ANONYMOUS: "COKIN Creative Filter system" COKIN, July 2002 (2002-07), pages 1-48, XP002318833 FRANCE
- ANONYMOUS: "KAtagog 81/82 für Foto - Video - Film" FOTO UND TECHNIC HAMA, 1981, page 231, XP002318834 GERMANY
- ANONYMOUS: "Der grosse Fotokatalog 95/96" DER GROSSE FOTOKATALOG, 1995, pages 90-92, XP002318835
- KÜHN H.: 'Technik der Lichtbildnerei', 1921, VON WILHELM KNAPP - HALLE A.D. SAALE, INNSBRUCK XP009073171 * page 117 - page 121 *

## Description

### TECHNICAL FIELD

The present invention relates to lens attachments for generating flares. In particular, it relates to lens attachments comprising threads or filaments which can be colored and which generate colored flares perpendicular thereto in reaction to light sources in a photographic subject.

### BACKGROUND AND STATE OF THE ART

Various lens attachments for influencing the picture which is exposed on a photographic film are known. These attachments are either mounted in front of a photographic lens or between the lens and the camera. For example, there are filters for absorbing undesired radiation such as UV or Skylight filters, filters for filtering out reflections such as polarizers, filters for influencing the color temperature and filters for enlarging the contrast between certain colored portions of a photographic subject such as yellow, red and green filters as used in black and white photography. In cinematography, often effect lens attachments are used which produce additional effects such as soft-focus lenses or so-called star filters. The latter usually comprise glass panes with engravings thereon wherein the engravings produce flares in case the photographic subject contains highlights. For example, these star filters are mentioned in the catalogue "COKIN Creative Filter System (July 2002) on page 13 ff. However, these star filters have several disadvantages.

Firstly, the glass engravings are permanent and one special filter can only be used for a special camera lens and purpose - an adaptation to different conditions is not possible. The following example can serve to illustrate this fact. Generally, the flares are generated perpendicularly to the extension direction of the engravings and only have a short length. Thus, in order to produce a flare which is visible as a line and not just as a small spot around the engraving, several parallel engravings must be used to join the individual spots to a line. However, the appropriate distance of these parallel engravings depends on the camera lens used: whereas the parallel engravings may generate the desired flare line with one camera lens, their distance may be too large when a different camera lens is used and the flare line "breaks". Thus, conventional star filters are highly inflexible and cannot be adapted to different camera equipments. Secondly, due to the nature of the glass engravings, the filter only produces flares which have the same color as the highlight.

DE 20 50 652 A1 discloses a lens filter for generating diffraction images in optical pictures. For this purpose, multilayered stripes of interference coatings are applied to a transparent filter holder in a vaporization process. It is the object of this filter to achieve a diffraction effect which occurs for particular colors only. In this way, one obtains a sequence of images of a light source the colors of which can be determined in contrast to conventional diffraction gratings of wire. Since it is the object of DE 20 50 652 A1 to limit diffraction to particular colors only, a device with vaporized interference coatings is necessary which cannot easily be adapted to different camera/lens equipments.

JP 63 169892 A discloses a color image pickup device for improving the image resolution as well as the signal/noise ratio of color signals. This is achieved by tilting the lengthwise direction of each fine filter streak of a color separation stripe filter in response to the deformation of an effective beam spot shape due to the self-sharpening effect. The light received from an object through the stripe filter forms an image on a photoconductive surface to undergo photoconductive conversion. Since it is the object of JP 63 169892 A to improve image resolution as well as the signal / noise ratio of color signals, a device with a color separation filter and a photoconductive surface is necessary which cannot easily be adapted to different camera / lens equipments.

### SUMMARY OF THE INVENTION

It is an object of the present invention to provide a lens attachment for generating flares in reaction to light sources in a photographic subject which overcomes these drawbacks. The present invention aims at a lens attachment which is not only more flexible than prior art star filters but which can also easily be adapted to generate colored flares.

This is achieved by a lens attachment with the features as described in claim 1. According to the present invention, the lens attachment for generating flares in reaction to light sources in a photographic subject comprises a frame which is attached to a camera lens in a plane perpendicular to the optical axis and which is provided with flare means, characterized in that said flare means consist of threads or filaments which are tightened in the frame across the camera lens and which generate flares perpendicular to their extension direction.

Further advantageous features are disclosed in the dependent claims.

### BRIEF DESCRIPTION OF THE DRAWINGS

- Fig. 1: shows the general concept of the inventive lens attachment in an oblique view.
- Fig. 2: shows a possible setup using the lens attachment of Fig. 1.
- Fig. 3: shows a photographic subject as exposed on the film without making use of the lens attachment of Fig. 1.
- Fig. 4: shows a photographic subject as exposed on the film making use of the lens attachment as in Fig. 2.
- Fig. 5: shows a preferred embodiment of the inventive lens attachment from above.
- Fig. 6: shows the effect of the lens attachment of Fig. 1 on highlights which are located near the upper and lower ends of the picture.
- Fig. 7: shows the effect of the lens attachment of Fig. 5 on highlights which are located near the upper and lower ends of the picture.

### DESCRIPTION OF THE PREFERRED EMBODIMENTS

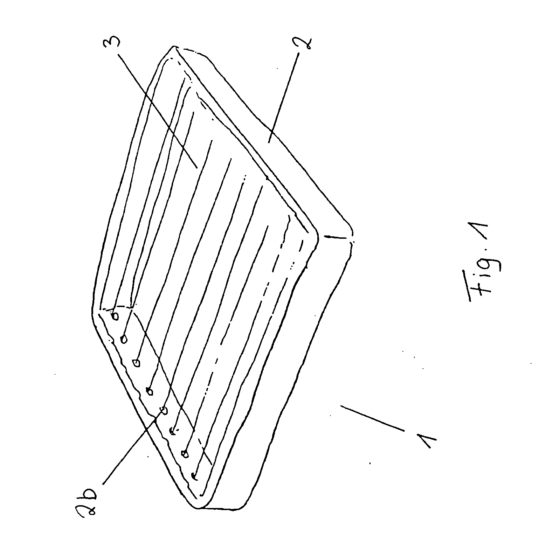

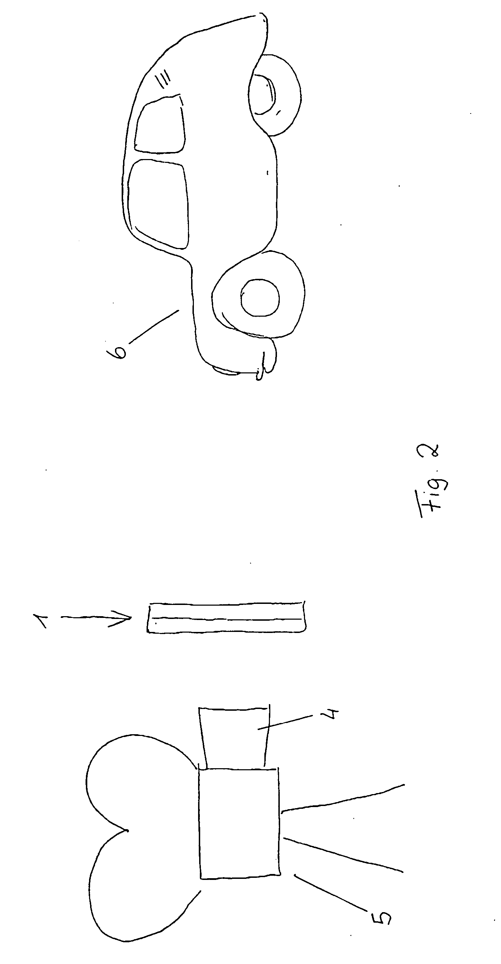

Fig. 1 and 2 illustrate the general construction and setup of the inventive lens attachment 1. It consists of a frame 2 and a plurality of threads or filaments 3 which can consist of nylon and which are tightened parallel to each other between two opposite sides of the frame, for example, by being fixed in holes 2b provided in the frame. During use, the lens attachment 1 is mounted in front of the lens 4 of a camera 5 in the plane perpendicular to the optical axis (cf. Fig. 2). In this way, the camera lens 'looks' at the photographic subject 6 - in this case, a car - through the frame provided with the threads or filaments.

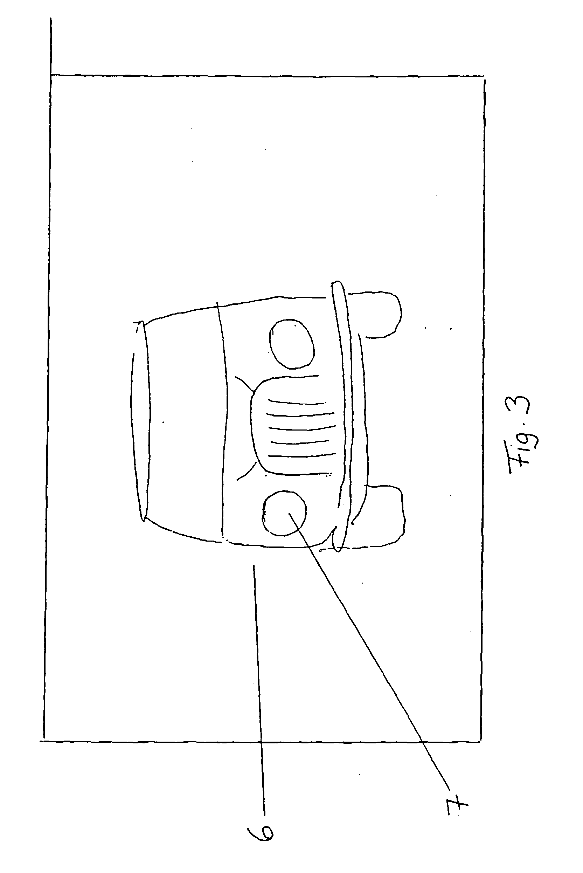

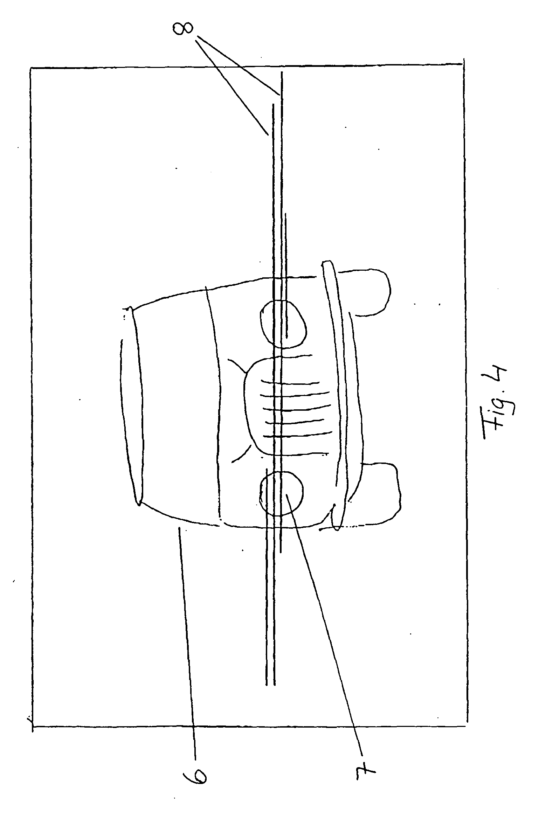

Fig. 3 and 4 illustrate the corresponding effect on the picture which is exposed on the film. Without the inventive lens attachment, the photographic subject 6 is exposed on the film 'as it is' (Fig. 3) - whereas, if the lens attachment is used, flare effects occur in reaction to highlights in the photographic subject. (Fig. 4). The inventive lens attachment functions as follows. If the photographic subject 6 contains highlights - such as switched on headlights 7 in case of the car - these light sources will produce flares 8 which are depicted perpendicular to the extension direction of the threads or filaments. Fig. 4 illustrates this effect for threads which are tightened vertically. Since the threads or filaments 3 are located close to the camera lens they will not be depicted on the film and are not shown in Fig. 3 and 4 for this reason.

As already mentioned above in connection with conventional star filters, flares in reaction to highlights in the photographic subject are generated perpendicular to the extension direction of the flare generating means. In the case as illustrated in Fig. 4, these flare generating means are the threads 3 which extend vertically. They produce horizontal flares in the form of a short line (about 2mm) perpendicular to each thread 3 and at a vertical position corresponding to the vertical position of the headlights 7 of the car 6. Since these individual flares as generated by each thread are rather short, several parallel vertical threads are used in order to "stretch out" the individual flares to visible lines - these are the horizontal lines 8.

It should be noted that enlarging the distance between the individual threads or filaments 3 leads to a lower intensity of the horizontal flares - up to the point when the horizontal flare lines "break" if the distance of the threads is too long. Furthermore, the threads or filaments 3 do not necessarily cover the whole area of the lens but can be located only in desired areas thereof, thereby producing a flare effect only in this area.

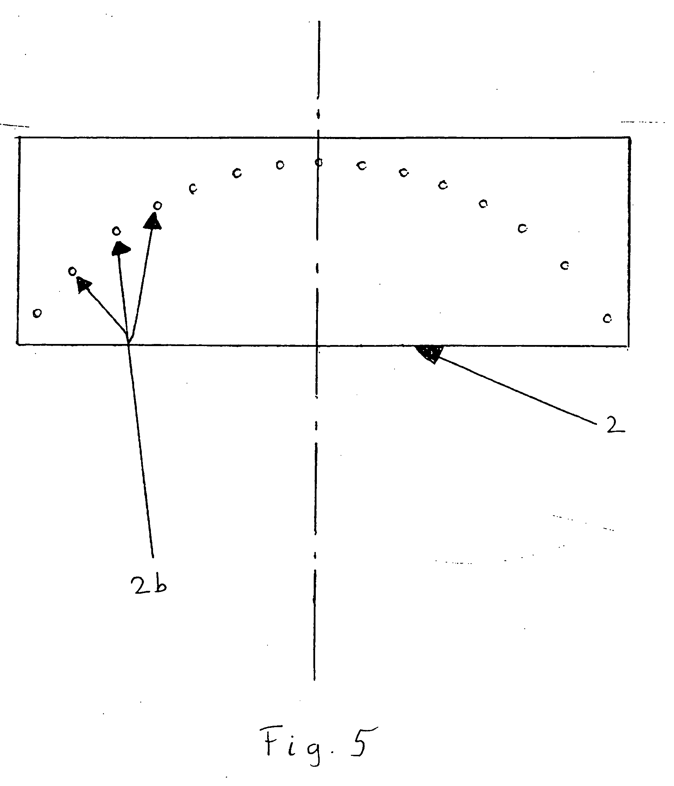

Fig. 5 shows a preferred embodiment of the lens attachment. In this embodiment, the threads or filaments 3 are arranged parallel to each other between two opposite sides (here: the top and bottom sides) of the frame 2 as already described for the general construction of Fig. 1 - however, they are not arranged in one plane (as shown in Fig. 1 for the general case) but along a circle in the plane perpendicular to the direction of their parallel extension such that they form a cylinder segment. This means that the frames or filaments 3 extend parallel to each other in the vertical direction Z (i.e., the direction between the top and bottom sides of the frame 2) and are arranged along a circle segment in the X-Y plane.

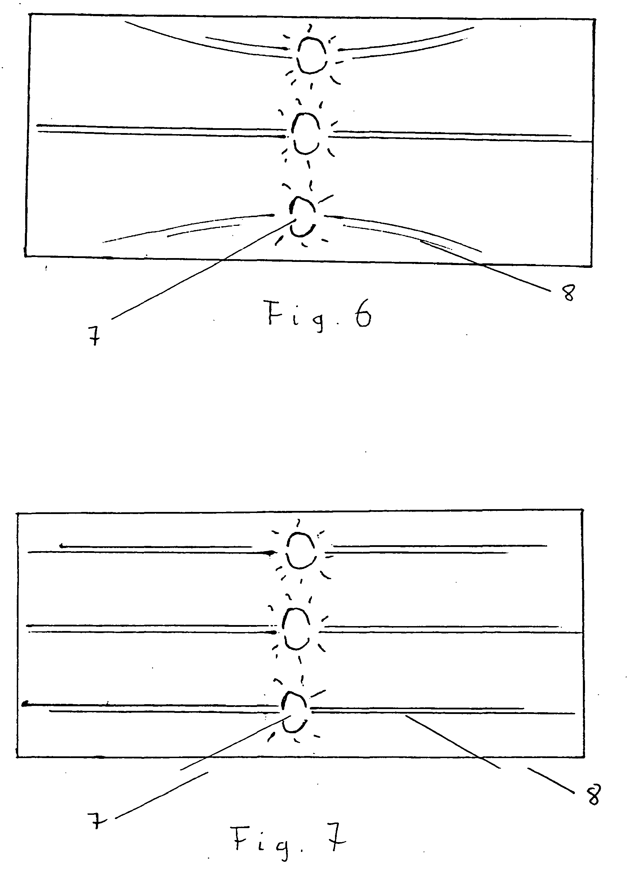

The reason for choosing such an arrangement of the threads or filaments 3 is as follows. As mentioned above, vertical threads or filaments 3 produce horizontal flares in the form of a short line perpendicular to each thread 3 and at a vertical position corresponding to the vertical position of a highlight7, wherein several parallel vertical threads 3 are used in order to "stretch out" the individual flares to visible horizontal lines 8. However, if the highlight 7 is located near the top or bottom part of the picture, the horizontal lines 8 created therefrom are distorted - i.e., they appear to be curved in such a manner as depicted in Fig. 6 - if the threads 3 are arranged in the way as depicted in Fig. 1. This undesired phenomenon is due to the general fact that the distortion of lenses increases at the image border. With the present invention, an easy and flexible way to overcome this phenomenon is achieved. Since the horizontal lines 8 of the flare are created from the highlight 7 by means of several vertical threads or filaments 3, the latter can be arranged to compensate for the distortion, i.e., the curvature of the horizontal lines 8. The arrangement is the cylindrical one described above: in this way, the distortion of the horizontal flare lines 8 is eliminated.

It is clear that this lens attachment is very flexible and can be adapted to all kinds of different requirements - in contrast to conventional star filters with their engravings. For example, the frame 2 can have a plurality of holes 2b for holding the individual threads or filaments 3, whereas only a part thereof is actually used. The holes can also be provided around the whole frame, thereby providing various ways to tighten the threads or filaments such as parallel, intersecting etc. In this connection, it should be clear that - due to the cylindrical symmetry around the optical axis - the remarks regarding the arrangement of the threads or filaments 3 according to Fig. 1 and 5 apply to all directions perpendicular to the optical axis.

Thus, the inventive lens attachment is highly flexible and can be used for different camera lenses and purposes, without having to manufacture a special filter for each application.

According to a further embodiment, the threads or filaments 3 can be colored on order to generate colored flares. As already mentioned, conventional star filters with their engraved glass can only produce flares in the same color as the highlights of the photographic subject. In contrast thereto, the present invention provides for a simple and reasonable way to obtain colored flares simply by coloring the threads or filaments prior to use. This coloring can be achieved with conventional material such as inks which are used for overhead transparencies, for example, EDDING T100. It is obvious that this way of providing for coloring the flare generating means is simple and highly flexible at reasonable costs. For example, if the threads or filaments are blue, the flare perpendicular thereto in reaction to the switched on headlights 7 of the car 6 is also blue, while the headlights 7 remain white.

Other ways of influencing the flare effects are also in the scope of this invention. For example, the threads or filaments can intersect in such a way that star shaped flares occur. The threads or filaments can also vary in their respective colors and/or their respective thickness etc. in order to create different flare effects in different areas in the picture. The material used for the threads or filaments can be nylon, glass fibers, polished metal threads etc. Furthermore, the frame can comprise optical glass panes arranged parallel to each other in front of and behind the threads or filaments for protection purposes.

The inventive lens attachment can be used with any digital or analogue photo, video or film camera.

It is emphasized that the embodiments of the present invention as mentioned above describe the invention by way of example only. Various alternatives are also in the scope of the present invention as defined in the appended claims. For example, the frame does not necessarily have a rectangular shape but can also be circular etc. Furthermore, the lens attachment can also be mounted behind the lens, i.e., between lens 4 and camera 5.

## Claims

1. Lens attachment (1) for generating flares in reaction to light sources in a photographic subject (6), comprising a frame (2) which is attachable to a camera lens (4) in the plane perpendicular to the optical axis and which is provided with flare means (3), **characterized in that** said flare means consist of threads or filaments which are tightened in the frame across the camera lens and which generate flares perpendicular to their extension direction.

2. Lens attachment according to claim 1, **characterized in that** the threads or filaments (3) extend parallel to each other.

3. Lens attachment according to claim 2, **characterized in that** the threads or filaments (3) are arranged along a circle segment in the plane perpendicular to the direction of their parallel extension such that they form a cylinder segment.

4. Lens attachment according to claim 1, **characterized in that** the threads or filaments (3) partly intersect.

5. Lens attachment according to one of the preceding claims, **characterized in that** the threads or filaments (3) are colored.

6. Lens attachment according to claim 5, **characterized in that** the threads or filaments (3) have varying colors.

7. Lens attachment according to one of the preceding claims, **characterized in that** the threads or filaments (3) have varying thicknesses.

8. Lens attachment according to one of the preceding claims, **characterized in that** the threads or filaments (3) consist of a material chosen from the group including nylon, glass fibers and metal threads.

9. Lens attachment according to one of the preceding claims, **characterized in that** the frame (2) further comprises two optical glass panes arranged parallel to each other in front of and behind the threads or filaments (3).

10. Combination of lens attachments, **characterized in that** several lens attachments according to one of the preceding claims are used behind each other along the optical axis.

## Patentansprüche

1. Objektivaufsatz (1) zum Erzeugen von Reflexen in Reaktion auf Lichtquellen in einem aufzunehmenden Gegenstand (6), mit einem Rahmen (2), der an ein Kameraobjektiv (4) in der zu dessen optischer Achse rechtwinkligen Ebene ansetzbar ist und eine Reflexeinrichtung (3) aufweist, **dadurch gekennzeichnet, dass** die Reflexeinrichtung aus Fäden oder Filamenten besteht, die im Rahmen über das Kameraobjektiv gespannt sind und Reflexe im rechten Winkel zu ihrer Erstreckungsrichtung erzeugen.

2. Objektivaufsatz nach Anspruch 1, **dadurch gekennzeichnet, dass** die Fäden bzw. Filamente (3) parallel zueinander verlaufen.

3. Objektivaufsatz nach Anspruch 2, **dadurch gekennzeichnet, dass** die Fäden bzw. Filamente (3) in der zur Richtung ihrer parallelen Erstreckung rechtwinkligen Ebene auf einem Kreissegment angeordnet sind, so dass sie ein Zylindermantelsegment aufspannen.

4. Objektivaufsatz nach Anspruch 1, **dadurch gekennzeichnet, dass** die Fäden bzw. Filamente (3) sich teilweise schneiden.

5. Objektivaufsatz nach einem der vorgehenden Ansprüche, **dadurch gekennzeichnet, dass** die Fäden bzw. Filamente (3) farbig sind.

6. Objektivaufsatz nach Anspruch 5, **dadurch gekennzeichnet, dass** die Fäden bzw. Filamente (3) unterschiedliche Farben aufweisen.

7. Objektivaufsatz nach einem der vorgehenden Ansprüche, **dadurch gekennzeichnet, dass** die Fäden bzw. Filamente (3) unterschiedlich dick sind.

8. Objektivaufsatz nach einem der vorgehenden Ansprüche, **dadurch gekennzeichnet, dass** die Fäden bzw. Filamente (3) aus einem Werkstoff bestehen, der aus der Gruppe Nylon, Glasfasern und Metallfäden gewählt ist.

9. Objektivaufsatz nach einem der vorgehenden Ansprüche, **dadurch gekennzeichnet, dass** der Rahmen (2) weiterhin zwei Flächen aus optischem Glas aufweist, die parallel zueinander vor und hinter den Fäden bzw. Filamenten (3) angeordnet sind.

10. Kombination von Objektivaufsätzen, **dadurch gekennzeichnet, dass** mehrere Objektivaufsätze nach einem der vorgehenden Ansprüche entlang der optischen Achse hintereinander angeordnet sind.

## Revendications

1. Accessoire de lentille (1) pour générer des éclats lumineux en réaction à des sources de lumière situées dans un sujet photographique (6), comprenant un cadre (2) qui peut être attaché à un objectif (4) dans le plan perpendiculaire à l'axe optique et qui est muni de moyens de production d'éclats lumineux (3), **caractérisé en ce que** lesdits moyens de production d'éclats lumineux sont constitués de fils ou filaments qui sont tendus dans le cadre à travers l'objectif et qui génèrent des éclats lumineux perpendiculairement à leur direction d'extension.

2. Accessoire de lentille selon la revendication 1, **caractérisé en ce que** les fils ou filaments (3) s'étendent parallèlement les uns aux autres.

3. Accessoire de lentille selon la revendication 2, **caractérisé en ce que** les fils ou filaments (3) sont agencés le long d'un segment de cercle dans le plan perpendiculaire à la direction de leur extension parallèle de sorte qu'ils forment un segment de cylindre.

4. Accessoire de lentille selon la revendication 1, **caractérisé en ce que** les fils ou filaments (3) s'entrecoupent partiellement.

5. Accessoire de lentille selon l'une des revendications précédentes, **caractérisé en ce que** les fils ou filaments sont colorés.

6. Accessoire de lentille selon la revendication 5, **caractérisé en ce que** les fils ou filaments (3) ont des couleurs variables.

7. Accessoire de lentille selon l'une des revendications précédentes, **caractérisé en ce que** les fils ou filaments (3) ont des épaisseurs variables.

8. Accessoire de lentille selon l'une quelconque des revendications précédentes, **caractérisé en ce que** les fils ou filaments (3) sont constitués d'un matériau choisi parmi le groupe incluant le Nylon, les fibres de verre et les fils métalliques.

9. Accessoire de lentille selon l'une quelconque des revendications précédentes, **caractérisé en ce que** le cadre (2) comporte de plus deux vitres de verre optique agencées parallèlement l'une à l'autre devant et derrière les fils ou filaments (3).

10. Combinaison d'accessoires de lentille, **caractérisée en ce que** plusieurs accessoires de lentille selon l'une des revendications précédentes sont utilisés les uns derrière les autres le long de l'axe optique.
